# NEW EUROPEAN PATENT SPECIFICATION

(11) **EP 0 672 803 B2**
(45) Date of publication and mention of the opposition decision: **07.03.2001**
(45) Mention of the grant of the patent: 18.06.1997
(21) Application number: 95104087.2
(22) Date of filing: 20.03.1995
(51) Int. Cl.: E04B 1/80

(54) **Mineral wool insulating board, its use, and method for producing it**
Dämmplatte aus Mineralwolle, ihre Anwendung und Verfahren zu ihrer Herstellung
Panneau isolant en laine minérale, son utilisation et procédé pour sa fabrication

(30) Priority: 18.03.1994 DE 4409416
(43) Date of publication of application: 20.09.1995
(73) Proprietor: SAINT-GOBAIN ISOVER, 92400 Courbevoie (FR)
(72) Inventor: Kummermehr, Hans, D-67059 Ludwigshafen (DE); Stoyke, Reinhard, D-67373 Dudenhofen (DE); Bihy, Lothar, D-67657 Kaiserslautern (DE)
(74) Representative: Kuhnen & Wacker

(56) References cited:
- EP-A- 0 015 455
- AT-B- 378 805
- DE-A- 3 223 246
- DE-U- 1 867 167
- DE-U- 8 528 331
- US-A- 3 861 971
- US-A- 4 201 247
- US-A- 4 847 140

## Description

The invention concerns an insulating board on the basis of a mineral wool bonded with a curable binding agent in accordance with claim 1, its use in accordance with claims 6, 7, and 8, as well as a method for producing it in accordance with claim 9.

In order to obtain mineral wool insulating boards, mineral fibers are produced from a molten material by means of fiberizing units and deposited on a reception means inside a chute following their solidification. The reception means has the form of a production conveyor and continuously carries the fibers compiled into a layer of mineral wool and thus forming a mineral fiber web. Most commonly, a binding agent is distributed inside the mineral wool while still in the chute, with this binding agent imparting mechanical strength to the web of wool after curing.

As a result of such deposition, the large majority of fibers are deposited while having an orientation wherein their longitudinal extension is in parallel with the receiving surface. Only comparatively few fibers have their longitudinal extension in the height direction of the web. In order to form a mineral wool insulating board, the mineral fiber web thus produced by deposition and provided with binding agent is taken into a curing oven where the binding agent is cured in order to preserve this shape of the web and to impart mechanical strength to it.

Due to the described fiber orientation, however, the mechanical strength against pressure acting on the large surface of the insulating board is only relatively low. Thus, with respect to the desired insulating effect, high compression of the mineral fiber web for the purpose of forming a high-strength insulating board cannot be made use of to such an extent as to result in solid mutual support of the horizontally aligned fibers. The spaces required for insulating purposes can, hoewver, not contribute to supporting the fibers having a generally horizontal orientation when pressure is applied.

Several applications do, however, require a relatively high resistance against pressure of the insulating boards. This is the case e.g. if the insulating boards should be capable of being walked on or otherwise resisting local application of pressure. The resistance against pressure of such insulating boards is measured by means of a test apparatus which determines the compression rate in accordance with the compressing force.

Apart from resistance against pressure, tensile strength in the direction perpendicular to the board large surface is relatively low for analogous reasons. When a pull acts on the board large surface, as may occur e.g. in applications involving flow dynamics or due to suction engendered by wind at outer walls of buildings, the occurring tensile forces may bring about delamination of surface areas of the insulating board. In this respect, the term "resistance against pressure" shall generally encompass tensile strength in a direction opposite to compressive load in the framework of this patent specification.

Correspondingly, improving the resistance of mineral wool insulating boards to compression has heretofore been a central problem with a view to specific applications. Up to the present, two ways of proceeding became known in order to increase resistance against pressure of a mineral fiber board without, however, increasing its apparent density and/or binding agent content in an unacceptable degree: the concepts of the lamellar board (see e.g., DE-A-3 223 246) on the one hand and the crimped board on the other hand.

In order to produce a lamellar board, a conventional mineral fiber board is cut to strips having a width corresponding to the height of the board to be produced. These strips are then rotated by 90° and thus recombined in order to form the board. In a lamellar board thus formed, the fiber orientation generated during deposition is therefore tilted by 90°, whereby fibers which were perpendicular to the plane of cutting are now erect in the height direction and thus result in a fiber orientation which is capable of receiving considerably higher pressure loads.

In order to form a crimped board, the web is compressed lengthwise prior to curing of the binding agent, whereby a part of the fibers having a lengthwise orientation are upset or caused to stand erect and thus arrive at an orientation in height direction. Curing of the binding agent and thus solidifaction of the mineral wool material is carried out while in this position.

In either case, increasing the resistance against pressure is achieved by means of a preferable fiber orientation in height direction of the insulating board, i.e. in the direction of a heat flow, coinciding with the desired direction of the board's insulating effect. Apart from further drawbacks such as expenditure, reduced resistance against pressure in a direction parallel to the large surfaces etc. there results in both techniques a quite considerable decrease of the insulating effect due to the fact that the fiber contents aligned in the height direction, in a manner of speaking, form a multitude of minute thermal bridges.

US 4,201,247 discloses a composite product comprising of amorphous glass fibers and crystallizable mineral fibers, in particular rock fibers. In order to benefit on the advantages of both types of fibers, the two types of fibers are blended in a chute homogenously to arrive at a product having mixed fibers, or separate layers of each kind of fibers are preproduced and laminated to a multi-layer-product subsequently.

US 3 861 971 discloses forming of a thermal insulating roofing board by discharging individual discontinuous fibers with besides particles intermingled therewith and having in an upper layer a stratum of bundles or strands of glass fibers mixed with said discontinuous fibers and said binder. Said upper layer is finally impregnated with asphalt.

The invention, on the other hand, is based on the objective of furnishing an insulating board which has an increased resistance against pressure, however without the necessity of an unacceptable trade-off against the insulating effect.

This object is attained by the features of claim 1.

Incorporating fibers having a greater length and mechanical strength, and bonding them in an external layer of the structure of the mineral wool by means of the binding agent surprisingly results in an increased resistance against pressure, notwithstanding the fact that all of the fibers are still aligned in parallel with the supporting surface. This improved resistance against pressure becomes particularly conspicuous at higher pressure loads resulting in deformations of the insulating board. The reason for this surprising increase in mechanical strength even without a higher content of fibers being aligned in the height direction is presumed to reside in a bracing effect caused by the fibers of a different kind. According to this theory, the fibers of a different kind which project out of the pressurised surface area are subjected to increased tension when the surface area receives a pressure load and is deformed, which tension is intercepted inside the structure of the mineral wool at a distance from the pressurised surface area thanks to bonding of the external ends of the pressurised fibers by the binding agent, and which thereby increasingly supports the pressurised surface area as the amount of deformation increases. Consequently, the pressure load would increasingly be converted to a tensile load on the fibers of a different kind with increased penetration of the pressure load, this tensile load in turn being intercepted inside the undisturbed mineral wool structure at a distance from the pressurised surface area.

When the material of the fibers of a different kind is suitably chosen, there is not necessarily any degradation of the insulating effect of the insulating board of the invention. But even when a material having a higher thermal conductivity is used in order to improve tensile strength or processing properties of the fibers of a different kind, the decrease of the thermal insulation effect may be kept low, for the fibers of a different kind, in order to have the described effect, also should only be aligned essentially in parallel with the support surface inside the mineral wool material, thus crossing the direction of the thermal flow and only minimally contributing to an increased thermal flow even in the case of material having higher heat conductivity.

In comparison with the former problem solutions - lamellar board or longitudinally compressed board - there is furthermore the advantage of minimum production expenditure, as merely part of the mineral fibers need to be replaced with the fibers of a different kind, and without the necessity of carrying out subsequent expensive method steps on the deposited fibers. The high resistance against longitudinal compression of the insulating board thus produced - i.e. resistance against pressure parallel to the large surfaces - is furthermore unaltered, such that the increased resistance against pressure is not at the expense of a noticeable loss of mechanical strength in a different location.

It has already been attempted to improve the needling properties of rock wool material by adding to the rock wool filaments of a different kind having greater length and particularly higher flexibility which are entangled during the process and thus impart mechanical strength to the needle-processed felt. In this case, the filaments of a different kind are restricted to their function of a needling aid and would thus be meaningless when the rock wool is solidified by curing of a binding agent.

In the case where the fibers of a different kind according to claim 2 are essentially rectilinear or have a large-radius curvature in their longitudinal extension, they are rapidly subjected to tension when the surface is pressurised, causing them to become effective after only a small depression of the surface. If, however, strongly deformed fibers such as e.g. curled fibers are used, then the loops formed by these fibers first have to be straightened before noticeable tension forces may be transmitted, wherefore a corresonding solidification occurs only after major deformation.

According to claim 3, the fibers of a different kind are preferably formed of portions of textile glass fibers separated at least in a high degree. Hereby fibers of a different kind having a suitable consistency may be obtained in a cost-effective manner. Textile glass fibers are, for example, available in the form of so-called rovings having a large variety of material properties. This makes it possible to select a suitable type of glass fiber for any purpose of the insulating board.

The contents of the fibers of a different kind indicated in claim 4 were found to be advantageous. With higher contents of fibers of a different kind, the mechanical strength of the matrix of the mineral wool material tends to decline, thereby degrading anchoring of the fibers of a different kind, whereas only part of the efficiency of the fibers of a different kind may be obtained if their contents are lower.

The upper limit of approximately 200 kg/m³ for the apparent density indicated in claim 5 results in a sufficiently tight mineral fiber compound in order to well anchor the fibers of a different kind, and optimum increase of the mechanical strength through the measures of the invention. Below an apparent density of 200 kg/m³ the mechanical strength gradually drops, however an improved thermal insulating ability of such a lighter insulating board may result.

Use of an insulating board or multi-layer board of the invention according to claim 6 as a roof insulating board for a flat roof makes use of the increased resistance against pressure without necessarily reducing the thermal insulating ability in a manner optimally suited for practical use. Use as an insulating board for outer walls of buildings according to claim 7 makes corresponding use of the increased tensile strength in a direction transverse to the large surface of the board for higher stability against suction engendered by wind. The insulating board according to the invention is particularly suited for insulating curved surfaces, for example as a so-called grooved board, i.e. a board allowing articulation of the board sections separated by such grooves, or preferably a board comprising flexing zones for chimney insulation, inasmuch as the strengthened outer layer counteracts the tendency towards delamination occurring on the outside of the curvature in such applications.

The production method according to claim 9 assures minimum additional expense during production. Addition of the fibers of a different kind inside the chute, possibly together with the binding agent where the latter is not introduced later on, merely necessitates admixing means without otherwise interfering with the process in any other location.

Homogeneous distribution of the fibers of a different kind reduced to layers for forming an insulating board according to the invention results when the fibers are added only in one portion of the reception means having a limited width in transport direction, preferably in the section where the mineral wool material leaves the chute. Claims 10 and 11 represent embodiments of the method, the advantages of which result from the preceding description.

When, according to claim 12, as a preliminary stage for forming the fibers of a different kind, textile glass fibers are cut into sections of 40 to 60 mm, preferably 50 mm length before being separated into individual fibers, this results in a particularly favorable process management for production of the fibers of a different kind, as separating them into individual fibers is carried out in a simple manner only after preliminary cutting.

The method for producing a multi-layer board according to claim 13 also requires minimum additional expenditure when compared with conventional production of a multi-layer board. The fiber contents according to claim 14 thus resulted in favorable anchoring in the top layer, however at a relatively small modification of consistency compared with a conventional mineral wool layer.

Further details, and advantages of an embodiment of the present invention result from the description following below while making reference to the drawing, wherein:
Fig. 1 is a schematically simplified sectional view of the lower portion of a chute for producing mineral wool, with this lower portion being designed for producing another embodiment of a mineral wool insulating board according to the invention;
Fig. 2 is a perspective view of a mineral wool insulating board for use as a grooved board according to the invention and produced by the method according to Fig. 1; and
Fig. 3 is a sectional view of a mineral wool insulating board according to Fig. 2 when used as a chimney insulating board.

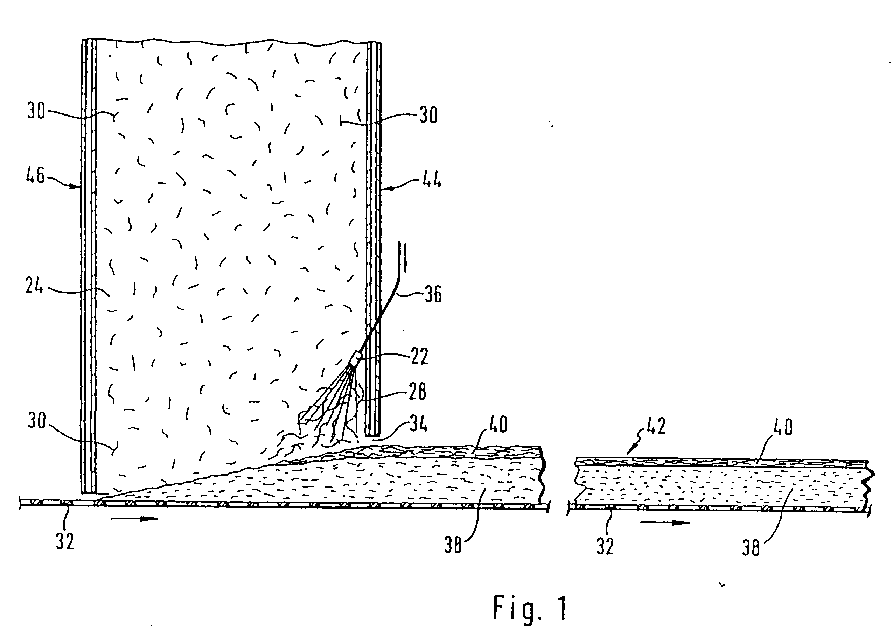

Fig. 1 shows in a schematically simplified manner the arrangement for producing an insulating board wherein fibers 28 of a different kind are arranged in an outer layer 40 of the insulating board. In that way, the mineral wool web provided and reinforced with the non-metallic fibers 28 of a different kind is produced concurrently with the mineral wool web that is not provided with the fibers of a different kind. Separate production of an insulating board reinforced with the fibers of a different kind and an insulating board without reinforcement, and subsequent bonding together of these separately produced insulating boards in order to obtain a multi-layer board comprising a top layer and a base layer is thus not necessary in the method or arrangement according to Fig. 1.

In Fig. 1, as well, the fibers 28 of a different kind are represented in the form of wavy or curly fibers for reasons of better visualisation of the fibers 28 compared to the mineral wool fibers only. Under practical circumstances, the fibers 28 of a different kind preferably have an essentially straigth shape or large-radius curvatures in their longitudinal extension.

Fig. 1 shows the bottom end or the lower part of the chute 24. A known device produces mineral wool fibers 30 provided with binding agent and sends them downwards to gas-permeable reception means positioned underneath and having the form e.g. of a production conveyor 32. The production conveyor 32 transports the deposited mineral wool fibers 30 in the direction of the arrows from an outlet opening 34 of the chute 24 to the subsequent processing stations. As the mineral wool fibers 30 deposited on the conveyor 32 are transported from the left side to the right side of Fig. 1, and due to the depositing stream of mineral wool fibers 30 being essentially constant and homogeneous over the cross-section of the chute 24, the layer thickness of the deposited mineral wool fibers 30 in Fig. 1 also increases continually from the left to the right side.

In a lower end portion near the opening 34, there is provided a plurality of spray nozzles 22 each supplied with the non-metallic fibers 28 of a different kind via a conduit 36. These fibers 28 of a different kind thus enter into the flow of mineral wool fibers 30 arriving from the blast nozzle means to intimately blend with them. On a layer 38 entirely consisting of solely mineral wool fibers plus binding agent, another layer 40 consisting of mineral wool fibers 30 plus the fibers 28 of a different kind plus binding agent is deposited. The two overlying layers 38 and 40 are transported to a downstream finishing station shown in Fig. 1 where the layers 38 and 40 are compressed and then pass through a tunnel furnace. The final product is an insulating board 42 consisting of the base layer 38 of mineral wool fibers only, and the top layer 40 wherein the non-metallic fibers 28 of a different kind are present together with the mineral wool fibers 30. Thanks to the top layer 40 comprising the fibers 28 of a different kind, such an insulating board 42 may receive a high load such as persons walking or vehicles driving on it, and is furthermore suited for use as an insulating board, even an insulating board for outer walls of buildings, for due to the pressure-resistent top layer 40, the insulating board 42 can also easily resist wind suction forces when used as an insulating board for outer walls of buildings.

In the method or arrangement according to Fig. 1, as well, production of the base layer 38 and the top layer 40 is carried out in one step, making the bonding together of separately produced top and base layers for obtaining a multi-layer board unnecessary.

As mentioned above, the additionally provided individual fibers 28 preferably are separated portions of textile glass fibers. For this purpose, bundles of glass fibers, or so-called rovings, are cut into portions of approximately 40 to 60 mm, preferably approximately 50 mm length, after which the cut bundles of glass fibers are separated into individual fibers by suitable measures. The individual fibers 28 are then, in the course of producing the top layer, injected. The content of the individual fibers 28 in the top layer is less than 40%, preferably approximately 20% or less, in particular approximately 10%. Due to the additional individual fibers 28 having a greater average length and tensile strength than the mineral wool fibers, there results an increase in resistance against pressure, although all of the fibers are as before mainly aligned in a direction parallel to the support surface. This improved resistance against pressure makes itself felt particularly at increased pressure loads bringing about deformations of the insulating board. The reason for this increased mechanical strength, even in the absence of an increased content of fibers oriented along the height direction, presumably is due to a bracing effect by the fibers of a different kind. Accordingly, the fibers 28 of a different kind projecting out of the pressurised surface area are subjected to increased tension by pressure load and deformation of the surface areas, with this tension being intercepted inside the structure of the mineral wool at a distance from the pressurised surface area due to bonding of the outer ends of the pressurised fibers with binding agent, and which thus increasingly supports the pressurised surface area at increasing deformation. The pressure load is thus at increasing penetration of the pressure load more and more strongly converted into a tensional load on the fibers 28 of a different kind, which in turn is intercepted inside the undisturbed structure of the mineral wool at a distance from the pressurised surface area. The fibers 28 of a different kind preferably have a rectilinear form or a large-radius curvatures in their longitudinal extension. Thus a tension load is rapidly applied to them due to a pressure load on the surface, such that the mechanisms described above take effect even after a slight depression of the surface. If, on the other hand, strongly deformed fibers such as curled fibers were used, the loops formed by these fibers would at first have to be straightened before noticeable tension forces can be passed on, and a corresponding strenghtening would occur only after a larger amount of deformation.

The improved stiffness resisting bending, in turn, makes it possible for the top layer of the mineral wool board e.g. to be walked on without damage to the board surface. A mineral wool board produced by the method of this invention may thus preferably be used as a roof insulating board, but also as an insulating board for outer walls of buildings, because it is also capable of neutralising horizontal forces such as suction engendered by wind.

The ratio of top layer and base layer thicknesses depends on the concrete purpose of use, however is within a range between approximately 1:2 and approximately 1:10. In order to obtain further improvement of the mechaniccal properties of the entire board, the base layer may also be partly compressed in the longitudinal direction.

It will be understood that the arrangement shown in Fig.1 should be taken to be only an example. The spray nozzles 22 might as well be positioned on the left-hand side of the chute 24 in Fig. 1. The result would be the production of an insulating board the top layer 40 of which lies on the production conveyor 32 and the base layer 38 of which is deposited on the top layer 40. It is also possible to provide spray nozzles 22 for outputting the fibers 28 of a different kind in the area of the front wall 44 as well as in the area of the rear wall 46. This would result in an insulating board wherein one layer of mineral wool fibers only is sandwiched between two outer layers consisting of the mineral wool fibers plus the fibers of a different kind. Such a multi-layer structure would without the binding agent also preferably be suited to thereby produce a needle felt having higher mechanical strength than those according to the prior art.

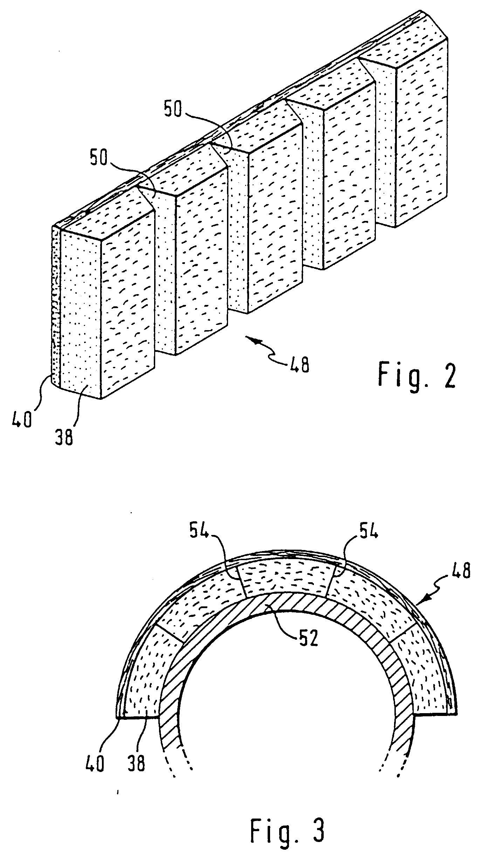

Fig. 2 shows the possible applications of an insulating board 42 as a so-called grooved board. The grooved board 48 represented in Fig. 2 includes the base layer 38 consisting of mineral wool fibers 30 and the highly pressure resistant top layer 40 consisting of mineral wool fibers 30 plus the fibers 28 of a different kind. As is shown in Fig. 2, a plurality of wedge-shaped sections 50 is incorporated into the base layer 38, with the wedge-shaped sections 50 extending essentially as far as the area of the top layer 40.

Use of such a grooved board 48 is represented in Fig. 3. By means of this grooved board 48 a cylindrical object, for example a chimney pipe 52, may effectively be insulated. Depending on the diameter of the chimney pipe 52 or the longitudinal extension of the grooved board 48, one, two, three or more such grooved boards 48 are required in order to cover the entire circumference of the chimney pipe 52. Thanks to the wedge-shaped sections 50 in the base layer 38, the grooved board 48 may properly be applied to the outer circumference of the chimney pipe 52, with the wedge-shaped sections 50 closing in different degrees depending on the diameter of the chimney pipe 52. Fig. 3 shows the ideal case in which the inclination of the wedge-shaped sections 50 and the diameter of the chimney pipe 52 match so well that the wedge-shaped sections 50 close perfectly, leaving nothing but incisions 54 in the base layer 38.

Due to the layer acting as an outer or top layer 40 wherein the fibers 28 of a different kind are contained in essentially homogeneous distribution among the mineral wool fibers 30, there is not only an increased resistance against pressure, but also a unilateral increase in tensile strength of the grooved board 48 such that this board presents improved resistance against splitting and delaminations when bent such as shown in Fig. 4 while the top layer 40 is arranged on the outside. As the base layer 38 consists of mineral wool fibers only, this base layer 38 does not have any increased strength against forces acting in parallel with the large faces. Even an insulating board according to the invention lacking the the wedge-shaped sections 50 may thus, in a given case, be bent around less strongly curved surfaces without receiving damage.

Instead of the wedge-shaped sections 50, a number of flexing zones may, in a given case, be provided in the material of the insulating board in order to attain better pliability, in particular around more strongly curved surfaces.

## Claims

1. Insulating board on the basis of mineral wool bonded by a curable binding agent, producible by deposition of mineral fibers on a reception means (32) simultaneous with non-metallic fibers (28) of a different kind having a greater average length and tensile strength than the mineral fibers of said mineral wool (30) wherein said fibers (28) of a different kind are for at least the most part present as individual filters, and are located only in an external layer (40) of said insulating board in essentially homogeneous distribution, being miseed with the mineral fibers of said mineral wool (30) and with said binding agent, and wherein their deposition together with said mineral fibers is implemented only in a section of said reception means (32) having a limited width in the transport direction.

2. Insulating board according to claim 1, *characterised in that* said fibers (28) of a different kind are formed such as to be essentially rectilinear or have a large-radius curvature.

3. Insulating board according to claim 1 or 2, *characterised in that* said fibers (28) of a different kind having a defined length are formed of portions of textile glass fibers separated at least in a high degree.

4. Insulating board according to any one of claims 1 to 3, *characterised in that* the content of said fibers (28) of a different kind in the mineral wool is less than 40% by weight, preferably less than 20% by weight, in particular less than 10% by weight.

5. Insulating board according to any one of claims 1 to 4, *characterised by* an apparent density of approximately 200 kg/m³ or less.

6. Use of the insulating board according to any one of claims 1 to 5 as a roof insulating board.

7. Use of the insulating board according to any one of claims 1 to 5 as an insulating board for outer walls of buildings.

8. Use of the insulating board according to claim 1 as an insulation for curved surfaces, with the layer (40) containing said fibers of a different kind being located on the outside of the curvature.

9. Method for producing an insulating board according to any one of claims 1 to 5, said mineral wool of the board being formed by deposition of fibers (30) transported by a gaseous flow, on a gas-permeable reception means (32), wherein said mineral fibers (30) are blended with said fibers (28) of a different kind, which are for at least the most part present as individual fibers, on their trajectory towards said reception means (32), wherein addition of said fibers (28) of a different kind from said chute (24) is implemented in a section of said reception means (32) at the entrance and/or outlet of said chute (24) having a limited width in the transport direction.

10. Method according to claim 9, *characterised in that* said fibers (28) of a different kind are constituted by fibers being essentially rectilinear or curved at a large-radius curvature.

11. Method according to claim 9 or 10, *characterised in that* said fibers (28) of a different kind having a defined length are constituted by portions of textile glass fibers which were at least partly separated.

12. Method according to any one of claims 9 to 11, *characterised in that* as a a preliminary phase of forming said individual fibers (28) of a different kind, textile glass fibers are cut to portions having a length of 40 to 60 mm, preferably 50 mm, prior to their being separated into individual fibers.

13. Method according to any one of claims 9 to 12 for producing a multi-layer board according to any one of claims 6 to 10, *characterised in that* said top layer (40) and said base layer (38) are pre-fabricated as separate mineral fiber webs and then superposed, and that said top layer (40) is bonded together with said base layer (38) by compressing the combined layers and curing the binding agent contained in these layers.

14. Method according to claim 13, *characterised in that* the content of said fibers (28) of a different kind in said top layer (40) is less than 20% by weight, preferably less than 10% by weight.

## Patentansprüche

1. Dämmplatte auf der Basis von mit einem härtbaren Bindemittel gebundener Mineralwolle, wobei die Dämmplatte durch Ablagerung von Mineralfasern auf einem Aufnahmeorgan (32) gleichzeitig mit andersartigen, nicht-metallischen Fasern (28) herstellbar ist, welche eine größere durchschnittliche Länge und eine höhere Zugfestigkeit aufweisen als die Mineralfasern der Mineralwolle (30), wobei die genannten andersartigen Fasern (28) zumindest größtenteils als einzelne Fasern vorliegen und nur in einer Außenschicht (40) der Dämmplatte in im wesentlichen gleichförmiger Verteilung angeordnet und mit den Mineralfasern der Mineralwolle (30) und dem Bindemittel gemischt angeordnet sind, und wobei ferner ihre Ablagerung zusammen mit den Mineralfasern nur in einem Abschnitt des Aufnahmeorgans (32) vorgenommen wird, welcher in Transportrichtung begrenzte Breite hat.

2. Dämmplatte nach Anspruch 1, dadurch gekennzeichnet, daß die genannten andersartigen Fasern (28) so gebildet sind, daß sie im wesentlichen gradlinig sind oder mit großem Krümmungsradius gebogen sind.

3. Dämmplatte nach Anspruch 1 oder 2, dadurch gekennzeichnet, daß die genannten andersartigen Fasern (28) eine definierte Länge haben und aus Teilen textiler Glasfäden gebildet sind, die mindestens in hohem Maße aufgelöst sind.

4. Dämmplatte nach irgendeinem der Ansprüche 1 bis 3, dadurch gekennzeichnet, daß der Gehalt der andersartigen Fasern (28) in der Mineralwolle weniger als 40 Gewichtsprozent, vorzugsweise weniger als 20 Gewichtsprozent, insbesondere weniger als 10 Gewichtsprozent, beträgt.

5. Dämmplatte nach irgendeinem der Ansprüche 1 bis 4, gekennzeichnet durch eine Rohdichte von etwa 200 Kilogramm/m³ oder weniger.

6. Verwendung der Dämmplatte nach irgendeinem der Ansprüche 1 bis 5 als Dachdämmplatte.

7. Verwendung der Dämmplatte nach irgendeinem der Ansprüche 1 bis 5 als Gebäudeaußenmauer-Dämmplatte.

8. Verwendung der Dämmplatte nach Anspruch 1 als Dämmung für gekrümmte Flächen, wobei die die andersartigen Fasern enthaltende Schicht (40) auf der Außenseite der Krümmung gelegen ist.

9. Verfahren zur Herstellung einer Dämmplatte nach einem der Ansprüche 1 bis 5, wobei die Mineralwolle der Platte durch Ablagerung von durch einen Gasstrom geförderten Fasern (30) auf einem gasdurchlässigen Aufnahmeorgan (32) gebildet wird, wobei die Mineralfasern (30) mit den andersartigen Fasern (28), welche mindestens zum größten Teil als einzelne Fasern vorliegen, auf ihrem Weg zum Aufnahmeorgan (32) hin gemischt werden, wobei die Zugabe der andersartigen Fasern (28) aus dem Fallschacht (24) in einem Abschnitt des Aufnahmeorgans (32) mit in Transportrichtung begrenzter Breite am Eingang und/oder am Ausgang des Fallschachtes (24) durchgeführt wird.

10. Verfahren nach Anspruch 9, dadurch gekennzeichnet, daß die andersartigen Fasern (28) durch Fasern gebildet werden, die im wesentlichen geradlinig sind oder mit großem Krümmungsradius gebogen sind.

11. Verfahren nach Anspruch 9 oder 10, dadurch gekennzeichnet, daß die andersartigen Fasern (28) eine definierte Länge haben und von Abschnitten textiler Glasfäden gebildet sind, die mindestens teilweise aufgelöst worden sind.

12. Verfahren nach einem der Ansprüche 9 bis 11, dadurch gekennzeichnet, daß als Vorstufe zur Bildung der andersartigen Einzelfasern (28) textile Glasfäden in Abschnitten mit einer Länge von 40 bis 60 mm, vorzugsweise 50 mm, geschnitten werden, bevor sie zu Einzelfasern aufgelöst werden.

13. Verfahren nach einem der Ansprüche 9 bis 12, zur Herstellung einer Mehrschichtplatte nach einem der Ansprüche 6 bis 10, dadurch gekennzeichnet, daß die Deckschicht (40) und die Basisschicht (38) als separate Mineralfaserbahnen vorgefertigt werden und dann übereinandergelegt werden, und daß die Deckschicht (40) mit der Basisschicht (38) verbunden wird, indem die kombinierten Schichten zusammengedrückt werden und das in diesen Schichten enthaltene Bindemittel zur Aushärtung gebracht wird.

14. Verfahren nach Anspruch 13, dadurch gekennzeichnet, daß der Gehalt der andersartigen Fasern (28) in der Deckschicht (40) weniger als 20 Gewichtsprozent, vorzugsweise weniger als 10 Gewichtsprozent ist.

## Revendications

1. Panneau isolant à base de laine minérale liée par un agent de liaison durcissable, pouvant être produit par déposition de fibres minérales sur un dispositif de réception (32) simultanément avec des fibres non-métalliques (28) d'un type différent ayant une longueur moyenne et une force de tension plus grandes que celles des fibres minérales de ladite laine minérale (30), dans lequel lesdites fibres (28) d'un type différent sont, au moins pour leur plus grande partie, présentes en tant que fibres individuelles et ne sont situées que dans une couche externe (40) dudit panneau isolant selon une distribution pratiquement homogène, sous forme de mélanges avec les fibres minérales de ladite laine minérale (30) et avec ledit agent de liaison, et dans lequel leur déposition en simultané avec lesdites fibres minérales n'est effectuée que dans une section dudit dispositif de réception (32) ayant une largeur limitée dans la direction du transport.

2. Panneau isolant selon la revendication 1, *caractérisé en ce que* lesdites fibres (28) d'un type différent, sont formées de façon à être essentiellement rectilinéaires ou à avoir un grand rayon de courbure.

3. Panneau isolant selon la revendication 1 ou la revendication 2, *caractérisé en ce que* lesdites fibres (28) d'un type différent, ayant une longueur définie, sont formées de portions de fibres de verre textile, séparées au moins dans une grande proportion.

4. Panneau isolant selon l'une quelconque des revendications 1 à 3, *caractérisé en ce que* la teneur desdites fibres (28) d'un type différent, dans la laine minérale, est inférieure à 40 % en poids, de préférence, inférieure à 20 % en poids, en particulier, inférieure à 10 % en poids.

5. Panneau isolant selon l'une quelconque des revendications 1 à 4, *caractérisé par* une densité apparente d'environ 200 kg/m³, ou moins.

6. Utilisation du panneau isolant selon l'une quelconque des revendications 1 à 5, en tant que panneau isolant de toiture.

7. Utilisation du panneau isolant selon l'une quelconque des revendications 1 à 5, en tant que panneau isolant pour les murs extérieurs de bâtiments.

8. Utilisation du panneau isolant selon la revendication 1, en tant qu'isolation de surfaces courbes, la couche (40) contenant lesdites fibres de nature différente, étant placée à l'extérieur de la courbure.

9. Procédé de production d'un panneau isolant selon l'une quelconque des revendications 1 à 5, ladite laine minérale du panneau étant formée par déposition de fibres (30) transportées par un flux gazeux, sur un dispositif de réception (32) perméable aux gaz, caractérisé en ce que les fibres minérales (30) sont, sur leur trajectoire vers le dispositif de réception (32), mélangées auxdites fibres (28) d'un type différent, qui sont présentes, au moins pour leur plus grande partie, sous la forme de fibres individuelles, dans lequel l'addition desdites fibres (28) d'un type différent provenant du conduit (24) est effectuée dans une section dudit dispositif de réception (32) à l'entrée et/ou à la sortie dudit conduit (24) ayant une largeur limitée dans la direction du transport.

10. Procédé selon la revendication 9, *caractérisé en ce que* lesdites fibres (28) d'un type différent sont constituées par des fibres essentiellement rectilinéaires, ou courbées selon un grand rayon de courbure.

11. Procédé selon la revendication 9 ou la revendication 10, *caractérisé en ce que* lesdites fibres (28) d'un type différent ayant une longueur définie, sont constituées par des portions de fibres de verre textile qui ont été séparées, au moins en partie.

12. Procédé selon l'une quelconque des revendications 9 à 11, *caractérisé en ce que,* dans une phase préliminaire à la formation desdites fibres individuelles (28) d'un type différent, des fibres de verre textile sont coupées en portions ayant une longueur de 40 à 60 mm, de préférence, de 50 mm, avant d'être séparées en fibres individuelles.

13. Procédé selon l'une quelconque des revendications 9 à 12, pour la production d'un panneau multicouche selon l'une quelconque des revendications 6 à 10, *caractérisé en ce que* ladite couche supérieure (40), et ladite couche de base (38) sont préfabriquées sous la forme de tissus séparés de fibres minérales, et ensuite superposées, et que ladite couche supérieure (40) est liée à ladite couche de base (38) par compression des couches combinées, et durcissement de l'agent de liaison contenu dans ces couches.

14. Procédé selon la revendication 13, *caractérisé en ce que* la teneur desdites fibres (28) d'un type différent dans ladite couche supérieure (40), est inférieure à 20 % en poids, et de préférence, inférieure à 10 % en poids.
